**Europäisches Patentamt**

**European Patent Office**

**Office européen des brevets**

(19)

(11) Veröffentlichungsnummer : **0 093 462**
**B1**

(12)                    **EUROPÄISCHE PATENTSCHRIFT**

(45) Veröffentlichungstag der Patentschrift :
20.01.88

(51) Int. Cl.⁴ : **F 01 D 17/14**, **F 02 C   6/12**

(21) Anmeldenummer : **83200496.4**

(22) Anmeldetag : **08.04.83**

(54) **Abgasturbolader mit verstellbarem Ringschieber.**

(30) Priorität : 29.04.82 CH 2609/82

(43) Veröffentlichungstag der Anmeldung :
09.11.83 Patentblatt 83/45

(45) Bekanntmachung des Hinweises auf die Patenterteilung : 20.01.88 Patentblatt 88/03

(84) Benannte Vertragsstaaten :
**CH DE FR GB LI**

(56) Entgegenhaltungen :
**BE-A-   331 654**
**CH-A-   277 111**
**CH-A-   430 755**
**DE-A- 2 633 587**
**FR-A- 2 255 523**
**GB-A-   691 144**
**GB-A-   916 615**
**GB-A- 1 138 941**
**GB-A- 1 146 575**
**US-A- 2 996 996**
**US-A- 4 145 875**
**US-A- 4 214 850**

(73) Patentinhaber : **BBC Aktiengesellschaft Brown,**
**Boveri & Cie.**
**Haselstrasse**
**CH-5401 Baden (CH)**

(72) Erfinder : **Hörler, Hansulrich, Dr.**
**Lerchenberg 5**
**CH-8046 Zürich (CH)**

EP 0 093 462 B1

## Beschreibung

Die Erfindung bezieht sich auf einen Abgasturbolader für Verbrennungsmotoren gemäss Oberbegriff des Anspruchs 1.

Bei Teillast des Motors verringert sich die Abgasmenge, was bei unverändertem Turbinenzuströmquerschnitt zu einem Absinken des Ladedruckes führt. Dadurch erhält der Motor zu wenig Luft, wobei die Abgastemperatur und die Gefahr der unvollkommenen Verbrennung steigen. Um diesen Zustand störungsfrei fahren zu können, ist es erforderlich, dass der Turbinenzuströmquerschnitt während des Betriebes angepasst werden kann, was einen einigermassen konstanten Ladedruck und einen rauchfreien Betrieb im ganzen Regelbereich zur Folge hat.

Aus der CH-A-277 111 ist ein Abgasturbolader bekannt, dessen Radialturbine mit einem in axialer Richtung verstellbaren Ringschieber zur Veränderung des Turbinenzuströmungsquerschnittes versehen ist. Der Ringschieber ist zwischen dem radial durchströmten Turbinenleitapparat und den ebenfalls radial beaufschlagten Turbinenlaufschaufeln angeordnet. Durch diese Anordnung greift der Ringschieber bei der Veränderung des Strömungsquerschnittes voll in eine zusammenhängende radiale Strömung ein, wodurch es unweigerlich zu einer starken, mit Verlusten verbundenen Strömungsablösung kommt.

Aus der DE-A-2 633 587 ist ein weiterer Abgasturbolader bekannt, dessen Radialturbine ein doppelflutiges Gehäuse mit einem Zwillingskanal aufweist. Ein Kanal dieser Zwillingszuströmung kann durch einen Rohrschieber abgedeckt werden. Indessen ist hier kein Leitapparat vorgesehen. Der zweite Rohrschieber (Abblaseschieber) bildet zugleich Kontur der Axialturbine. Bei grosser Drehzahl der Brennkraftmaschine verstellt der abdeckende Rohrschieber den Abblaseschieber axial, so dass Leckverluste entstehen, d. h., ein gewolltes « Waste-Gate » um das Laufrad der Turbine wird damit angestrebt.

GB-A-1 146 575 beschreibt eine Turbine, bei der die Zuströmung zu den Laufschaufeln durch eine axiale zustellbare Ringplatte gedrosselt wird. Wohl ist die strömungsseitige Abschlusskontur der zustellbaren Ringplatte abgerundet, dies ist aber kein strukturierendes Merkmal zur Beeinflussung der Strömung, die auch keiner Richtungsänderung unterworfen ist. Da die Ringplatte eigentlich die Seitenwand des axialen Zuströmungskanals bildet, steht für einen Leitapparat kein Platz zur Verfügung.

GB-A-691 144 beschreibt vorerst eine mit einem Ringschieber gesteuerte Turbine, welche auch Teil eines Abgasturboladers sein kann, wobei auch hier der Ringschieber die radiale Strömung richtungsmässig nicht zu beeinflussen vermag. Eine starke, mit Verlusten verbundene Strömungsablösung ist hier die Folge. Auch die weitere Ausführungsvariante dieser Druckschrift, welche durch einen eingeschobenen verstellbaren Leitapparat gekennzeichnet ist, führt bei Betätigung der verstellbaren Regulierung zu Einschnürungen und Störungen der Strömung.

Hier will die Erfindung Abhilfe schaffen. Der Erfindung, wie sie in den Ansprüchen gekennzeichnet ist, liegt die Aufgabe zugrunde, bei einem Abgasturbolader der eingangs genannten Art die Anpassung des Turbinenzuströmungsquerschnittes im ganzen Drehzahlbereich ohne Beeinträchtigung der Strömung und stufenlos vorzunehmen. Die wesentlichen Vorteile der Erfindung sind darin zu sehen, dass der Zuströmwinkel zu den Turbinenlaufschaufeln im ganzen Regelbereich konstant bleibt und der Stossverlust an den Eintrittskanten der Turbinenlaufschaufeln weitgehend entfällt. Weil die Austrittskanten des Turbinenleitapparates zumindest teilweise auf einer zylindrischen Fläche liegen, kann sowohl eine Radial- als auch eine Axialturbine angetrieben werden.

Vorteilhafte und zweckmässige Weiterbildungen der erfindungsgemässen Aufgabenlösung sind in den abhängigen Ansprüchen gekennzeichnet.

In der Zeichnung sind Ausführungsbeispiele des Erfindungsgegenstandes vereinfacht dargestellt.

Es zeigen :

Fig. 1 die Radialturbine eines Abgasturboladers in einem Teillängsschnitt ;

Fig. 2 die Axialturbine eines Abgasturboladers in einem Teillängsschnitt ;

Fig. 3 eine weitere Axialturbine mit einem Doppelstrom-Leitapparat ;

Fig. 4 eine Abwandlung der Radialturbine gemäss Fig. 1 ;

Fig. 5 einen Querschnitt nach Linie X-X in Fig. 4.

Gleiche Teile sind in allen Figuren mit denselben Bezugszahlen versehen. Die Strömungsrichtung des Abgases ist mit Pfeilen eingezeichnet. Mit A ist die Stellung des Ringschiebers bei Vollast und mit B bei Mindestlast des Motors bezeichnet.

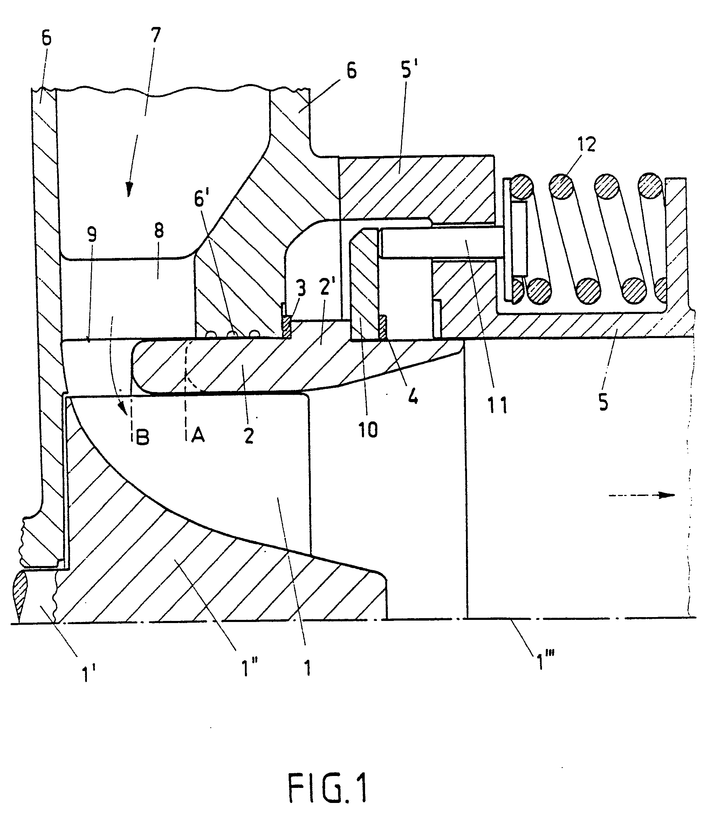

In Fig. 1 ist die obere Hälfte der Radialturbine eines Abgasturboladers gezeigt, dessen Gaseintrittsgehäuse 6 an eine nicht dargestellte Abgassammelleitung eines aufgeladenen Motors angeschlossen ist. Im Gaseintrittsgehäuse 6 ist ein Zuströmkanal 7 und ein aus Leitschaufeln bestehender Turbinenleitapparat 8 angeordnet. Die Turbinenwelle 1' ist im Gaseintrittsgehäuse 6 gelagert und trägt die mit Laufschaufeln 1 versehenen Nabe 1''. An das Gaseintrittsgehäuse 6 ist die Auspuffleitung 5 mit einem Flansch 5' angeschlossen.

Die Austrittskanten 9 des radial durchströmten Leitapparates 8 liegen auf einen koaxial zur Turboladerachse 1''' gedachten Zylinder, d. h., in der Projektion auf die Zeichenebene verlaufen die Austrittskanten 9 achsparallel. Zwischen den Austrittskanten des Leitapparates 8 und den Eintrittskanten der Laufschaufeln 1 ist ein Ringschieber 2 angeordnet, der in Wirkverbindung mit einer Ringplatte 10 und einem Druckstempel 11 gegen die Vorspannungskraft von Spiralfedern 12 axial verschiebbar ist.

Zwecks Kühlung sind die Federn 12 ausserhalb der Auspuffleitung 5 angebracht. Die Anzahl der Federn 12 und Druckstempel 11, die gleichmässig am Umfang verteilt sind, ist von der Grösse des Turboladers abhängig.

Geführt wird der Ringschieber 2 am Gaseintrittsgehäuse 6 ; zwischen ihm und der Auspuffleitung 5 besteht ein Spiel. Die Führung am Eintrittsgehäuse 6 ist mit einem Labyrinth 6' versehen, um ein Entweichen des Abgases in die Atmosphäre zu verhindern. Um die axiale Endstellung festzuhalten, ist der Ringschieber 2 an seinem Aussenumfang mit einer Schulter 2' versehen, welche je nach Stellung gegen das Eintrittsgehäuse 6 oder den Flansch 5' der Auspuffleitung 5 am Anschlag ist. Zur Anpassung an einen bestimmten Motor sind Unterlegscheiben 3 und 4 mit variabler Stärke vorgesehen.

Im gezeigten Beispiel verläuft die Aussenkontur der Turbinenlaufschaufeln 1 gerade und achsparallel, was für eine Radialturbine eher ungewohnt erscheint. Mit dieser einfachen Konstruktion sind indessen fast gleich gute Wirkungsgrade zu erreichen, wie mit sonst üblichen Konturen. Der Ringschieber 2 nimmt die volle Breite des zwischen Leitapparat 8 und Laufschaufeln 1 gebildeten Spaltes ein. Mit seinen zylindrischen Aussen- und Innenflächen gleitet er einerseits unmittelbar an den Leitschaufelkanten 9 und andererseits mit dem nötigen Betriebsspiel an den Aussenkanten der Laufschaufel 1 entlang. Die in den genannten Spalt hineinragende Stirnfläche des Ringschiebers ist strömungskonform abgerundet. Im vorliegenden Zusammenhang heisst das, dass die Stirnfläche und die daran angrenzende, den Turbinenlaufschaufeln zugekehrte Fläche des Ringschiebers derart gestaltet sind, dass die in der Projektion in der Zeichenebene radiale Zuströmung nahezu ablösungsfrei in eine in der gleichen Projektion im wesentlichen axiale Abströmung umgelenkt wird. Es versteht sich, dass auch die den Leitschaufeln zugekehrte Einströmkante des Ringschiebers entsprechend abgerundet ist. Zur stetigen Anpassung der Laufschaufelaustrittsfläche an die Auspuffinnenfläche ist die Hinterkante des Ringschiebers abgeschrägt.

Gasseitig wirkt der Turbolader folgendermassen : Das Abgas strömt durch den Gaseintrittskanal 7 und den Turbinenleitapparat 8 zu den Turbinenlaufschaufeln 1, in denen es unter Abgabe von Leistung entspannt und anschliessend durch die Auspuffleitung 5 in die Atmosphäre ausgestossen wird.

Wegen der Expansion des Abgases entsteht vor und nach den Turbinenlaufschaufeln ein Druckunterschied, der auf den Ringschieber 2 wirkt. Die axiale Kraft, die infolge des Abgasdruckunterschiedes auf die Stirnfläche des Ringschiebers 2 im Spalt zwischen Leitapparat und Laufschaufeleintritt wirkt, drückt über die Ringplatte 10 und Druckstempel 11 die Spiralfeder 12 zusammen und steht mit der Federkraft in Gleichgewicht.

Bei Vollast des Motors befindet sich der Schieber 2 in der Stellung A. Die massgebende Stirnfläche des Ringschiebers 2 ist durch die Stärke des Ringschiebers in radialer Richtung und seinen Durchmesser bestimmt. Die erforderliche Charakteristik und Vorspannung der Federn 12 sind durch Länge und Breite des Regelbereiches im Motorkennfeld bestimmt.

Wird die Last des Motors reduziert, so sinkt der Abgasdruck vor der Turbine und infolgedessen die auf die Stirnfläche des Ringschiebers wirkende axiale Kraft. Die zusammengepressten Federn 12 dehnen sich aus und verstellen den Schieber in Richtung der Endstellung B so lange, bis ein Gleichgewichtszustand zwischen der Gaskraft und Federkraft erreicht ist. Der Ringschieber 2 ragt nunmehr in den Strömungskanal hinein und verkleinert somit den Turbinenzuströmquerschnitt. Wesentlich ist hierbei, dass der Abströmwinkel aus dem Turbinenleitapparat 7 im ganzen Drehzahlbereich etwa konstant bleibt. Dadurch wird der Stossverlust an den Eintrittskanten der Turbinenlaufschaufeln weitgehend vermieden. Bei Stillstand oder Mindestlast des Motors befindet sich der Schieber 2 in der Stellung B.

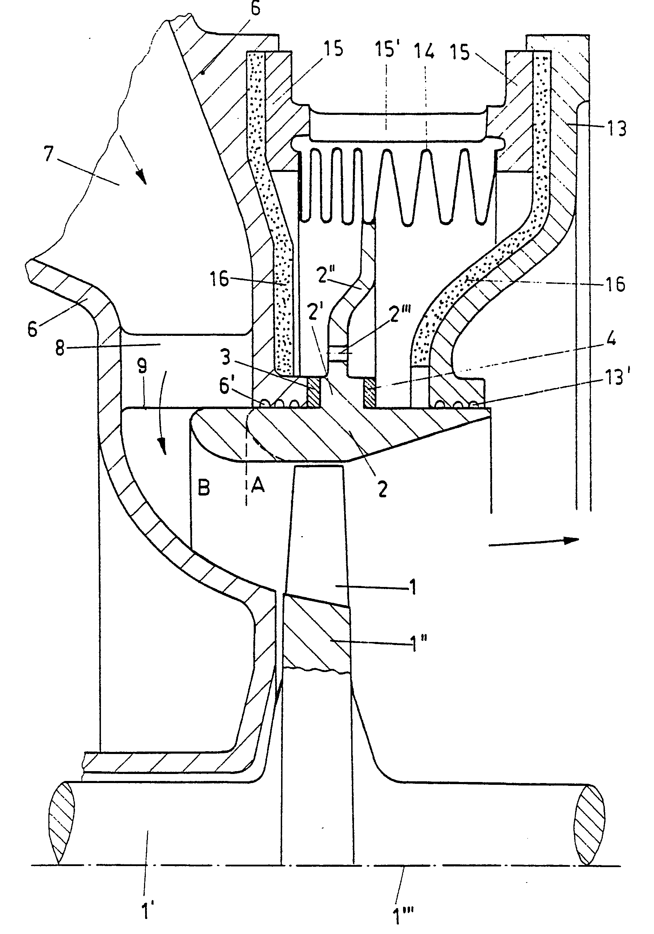

In Fig. 2 ist eine Axialturbine eines Abgasturboladers mit einem radial durchströmten Leitapparat 8 versehen. Das Gaseintrittsgehäuse 6 ist hier mittels eines Distanzringes 15, der an seinem zylindrischen Teil mit Aussparungen 15' versehen ist, mit einem Gasaustrittsgehäuse 13 verbunden. Im Innern des Distanzringes 15 ist ein Metallbalg 14 gasdicht angeordnet. Die Aussparungen 15' im Distanzring 15 sind derart ausgelegt, dass eine wirksame Kühlung des Metallbalgs 14 durch die Umgebungsluft gewährleistet wird. Der Ringschieber 2 ist zwischen dem radial durchströmten Turbinenleitapparat 8 und den axial durchströmten Turbinenlaufschaufeln 1 in axialer Richtung verstellbar angeordnet. An der Schulter 2' ist er über eine kreisförmige Platte 2'' mit der Mitte des Metallbalgs 14 fest verbunden, z. B. verschweisst. Die Platte 2'', die somit ein Bestandteil des Ringschiebers 2 ist, ist mit Druckausgleichslöchern 2''' versehen. Bei der Stellung B des Ringschiebers 2 liegt die Schulter 2' über die Unterlegscheibe 3 am Eintrittsgehäuse 6 an, während sie bei Stellung A über die Unterlegscheibe 4 am Gasaustrittsgehäuse 13 anliegt. Um die Wärmeübertragung zu vermindern, sind das Gaseintrittsgehäuse 6 und das Gasaustrittsgehäuse 13 mit Wärmeisolationsschichten 16 versehen.

Geführt wird der Ringschieber 2 einerseits am Gaseintrittsgehäuse 6 und andererseits am Gasaustrittsgehäuse 13. Die Führung des Ringschiebers 2 am Gaseintrittsgehäuse 6 ist mit einem Labyrinth 6' und am Gasaustrittsgehäuse 13 mit einem Labyrinth 13' versehen. Hierdurch wird das direkte Entweichen des Abgases in den Auspuff verhindert.

Die Betätigung des Ringschiebers erfolgt wie in Fig. 1 durch die axiale Kraft, die infolge des Abgasdruckunterschiedes vor und nach den Turbinenschaufeln 1 auf die Stirnfläche des Ringschiebers 2 wirkt. Diese Kraft wird über die Schulter 2' und die kreisförmige Platte 2" auf den Metallbalg 14 übertragen und steht mit der Federkraft des Metallbalges im Gleichgewicht. Der Metallbalg 14 sichert einerseits Gasdichtheit sowie andererseits die nötige Federkraft und Vorspannung für das gewünschte Uebergangsverhalten des Steuerungssystems.

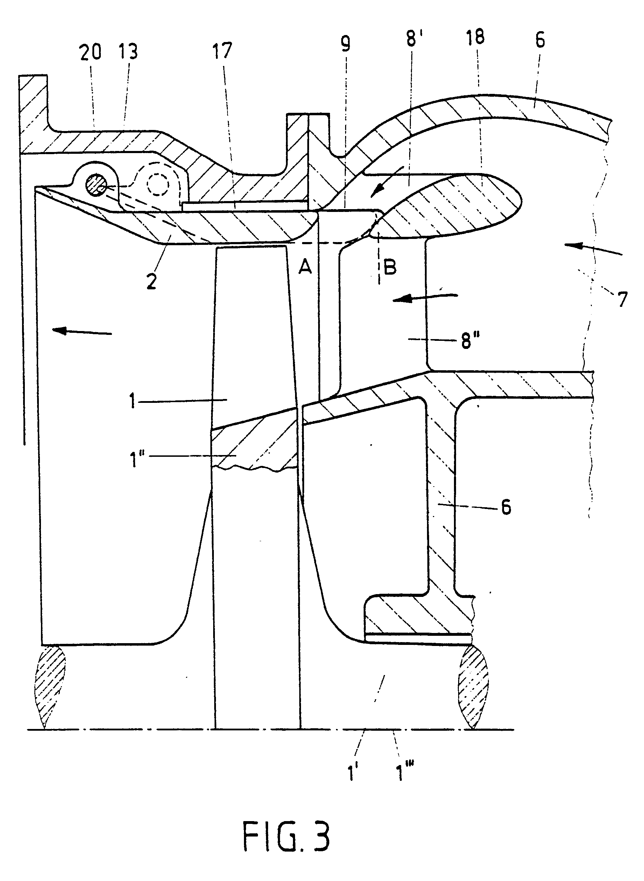

In Fig. 3 ist eine Axialturbine mit einem Doppelstromleitapparat versehen. Das Gaseintrittsgehäuse 6 enthält den Zuströmkanal 7 und einen Doppelstrom-Leitapparat 8', 8". Der je nach Ausbildung annähernd radial durchströmte Teil 8' des Turbinenleitapparates ist vom axialen Teil 8" durch einen Profilring 18 abgetrennt. Das Gaseintrittsgehäuse 6 ist unmittelbar an das Gasaustrittsgehäuse 13 angeschlossen. Letzteres geht in eine nicht gezeigte Auspuffleitung über.

Der Ringschieber 2 ist über ein Steilgewinde 17 im Gasaustrittsgehäuse 13 geführt. Der Ringschieber 2 nimmt die volle Breite des Spaltes zwischen dem radialen Teil 8' des Turbinenleitapparates und den Laufschaufeln 1 ein. Mit seinen zylindrischen Aussen- und Innenflächen ist er einerseits an den Leitschaufelkanten 9 und andererseits an den Aussenkanten der Laufschaufeln 1 entlang verschiebbar. Beim Verdrehen des Ringschiebers 2 mittels einer Zugstange 20 verschiebt sich der Ringschieber in axialer Richtung und ermöglicht so eine stufenlose Absperrung resp. Oeffnung des radialen Teiles des Leitapparates 8'.

Die Zugstange 20 ist derart ausgelegt, dass sie sich bei einer Verschiebung in ihrer Achsrichtung auch seitlich, d. h., in Achsrichtung des Turboladers verschiebt. Die maximale seitliche Verschiebung entspricht dem Abstand zwischen den Stellungen A und B des Ringschiebers 2. Die maximale Verdrehung ist von der maximalen Verschiebung des Schiebers und von der Steigung des Gewindes 17 abhängig. So entspricht z. B. bei einer Gewindesteigung von 45° die tangentiale Verstellung der Zugstange 20 der axialen Verschiebung des Ringschiebers 2.

Die Zugstange 20 ist mit einem nicht gezeichneten Steuerungsmechanismus verbunden. Dieser Mechanismus wird durch einen oder mehrere Motorparameter wie z. B.. Druck, Temperatur, Drehzahl oder Last betätigt. Beispielsweise kann zu diesem Zweck ein vom Motor angetriebener Fliehkraftregler bekannter Bauart verwendet werden. Der Fliehkraftregler muss mit dem Ringschieber 2 derart gekoppelt werden, dass sich der Ringschieber 2 bei Mindestdrehzahl des Motors in der Stellung B und bei Volldrehzahl in der Stellung A befindet. Die Zugstange 20 und der Steuermechanismus müssen zudem in der Lage sein, den Ringschieber 2 gegen eine Kraft zu verschieben, die infolge des Abgasdruckunterschiedes vor und nach Turbinenlaufschaufeln an der Stirnfläche des Ringschiebers wirkt.

Bei Vollast des Motors befindet sich der Ringschieber 2 in der Stellung A und beide Teile des Leitapparates 8', 8" werden voll durchströmt. Bei Teillast wird der axiale Teil 8" des Turbinenleitapparates voll durchströmt und der radiale Teil 8' wird infolge der stufenlosen Verstellung teilweise durchströmt. Bei Mindestlast des Motors befindet sich der Ringschieber 2 in der Stellung B und der radiale Teil 8' des Leitapparates ist verschlossen.

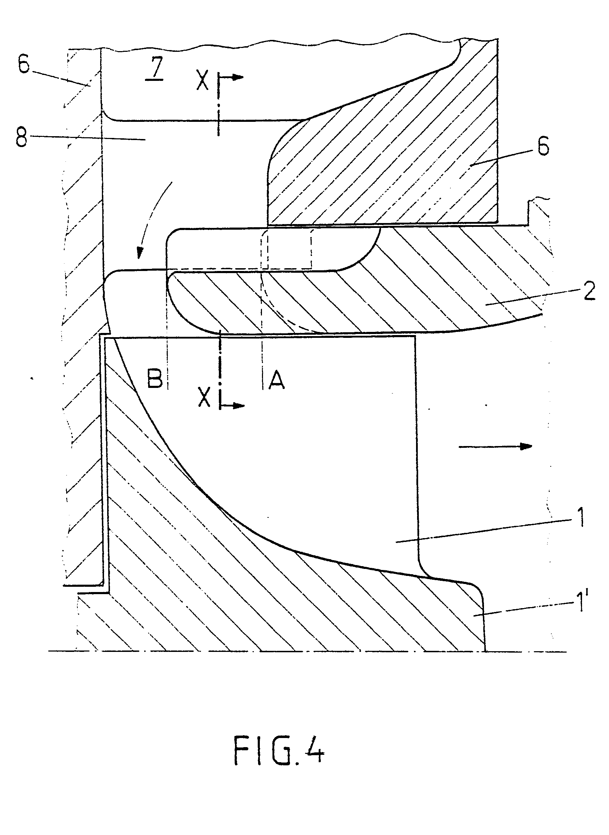

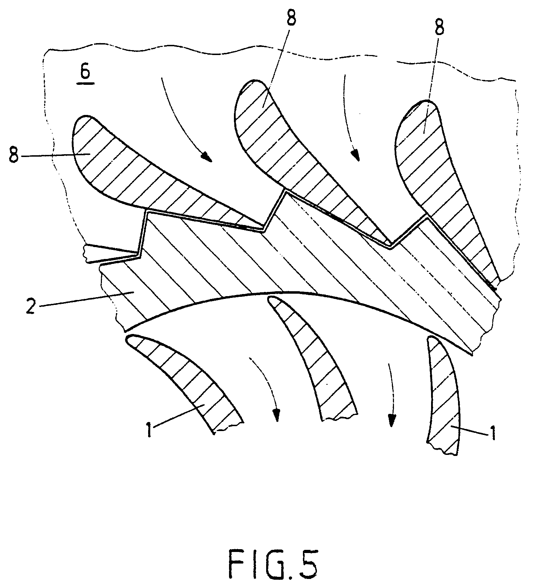

Bei der in Fig. 4 und 5 dargestellten Ausführung ist der Ringschieber 2 auf seinen dem Gasstrom zugewandten Teilen im Querschnitt an der Aussenoberfläche sägezahnförmig profiliert, wobei die Teilung der sägezahnförmigen Verzahnung der Teilung des Turbinenleitapparates 8, 8' entspricht. Die der Strömung zugewandte Fläche der Zähne steht zu den benachbarten Leitschaufeloberflächen annähernd senkrecht und ist zur Vermeidung von Strömungsablösungen zur Stirnseite des Ringschiebers abgerundet. Die Durchführung durch das Gehäuse 6 ist ebenfalls sägezahnförmig mit einem möglichst kleinen Leckspalt zum Ringschieber 2 ausgeschnitten.

Der Vorteil dieser Lösung besteht darin, dass die Sperrwirkung des Ringschiebers 2 an der engsten Stelle des Strömungskanals eingreift, wodurch die Wirkung des Ringschiebers 2 und der Teillastwirkungsgrad des Turboladers verbessert werden.

**Patentansprüche**

1. Abgasturbolader für Verbrennungsmotoren, dessen Turbine mit einem in axialer Richtung verstellbaren Ringschieber zur Veränderung des Turbinenzuströmquerschnittes versehen ist, wobei der Ringschieber (2) zwischen dem zumindest teilweise radial durchströmten Turbinenleitapparat (8, 8') und den Turbinenlaufschaufeln (1) angeordnet ist und die Austrittskanten (9) des radial durchströmten Teils des Turbinenleitapparates (8, 8') zumindest teilweise auf einem gedachten Zylinder liegen, wobei der Ringschieber (2) unmittelbar entlang der Austrittskanten (9) des Turbinenleitapparates (8, 8') verstellbar ist, dadurch gekennzeichnet, dass die radial innenliegende Kontur des Ringschiebers (2) zugleich äussere radiale Begrenzung und Fortsetzung des durch die Turbinenlaufschaufeln (1) vorgegebenen, im Abströmbereich axial verlaufenden Strömungskanals bildet, und dass die Stirnfläche und die daran angrenzende, den Turbinenlaufschaufeln zugekehrte Fläche des Ringschiebers (2) strömungskonform abgerundet sind.

2. Abgasturbolader nach Anspruch 1, dadurch gekennzeichnet, dass die Steuerung des Ringschiebers (2) durch den Druckunterschied des Abgases vor und nach den Turbinenlaufschaufeln (1) selbsttätig erfolgt, wobei die resultierende Gaskraft, die an die Stirnfläche des Ringschiebers (2) wirkt, im Gleichgewicht mit einer Federkraft steht.

3. Abgasturbolader nach Anspruch 1, dadurch gekennzeichnet, dass die Steuerung des Ringschiebers (2) durch einen oder mehrere Motorparameter wie z. B. Druck, Temperatur, Drehzahl oder Last, selbsttätig erfolgt.

4. Abgasturbolader nach Anspruch 1, dadurch gekennzeichnet, dass die an den Austrittskanten des Turbinenleitapparates (8, 8') entlang verstellbare Fläche des Ringschiebers (2) sägezahnförmig ausgebildet ist, wobei die Teilung dieser Verzahnung der Teilung des Turbinenleitapparates entspricht und wobei die dem Gasstrom zugewandte Fläche der Verzahnung im wesentlichen senkrecht zur Zuströmrichtung des Gases steht.

5. Abgasturbolader nach Anspruch 4, dadurch gekennzeichnet, dass das den Ringschieber (2) führende Gaseintrittsgehäuse (6) mit einer entsprechenden Verzahnung versehen ist.

### Claims

1. Internal combustion engine exhaust gas turbocharger whose turbine is provided with an annular gate valve, adjustable in the axial direction, for changing the turbine inlet cross-section, the annular gate valve (2) being located between the at least partially radial flow turbine guide apparatus (8, 8') and the turbine rotor blades (1) and the outlet edges (9) of the radial flow part of the turbine guide apparatus (8, 8') being located, at least partially on a hypothetical cylinder, the annular gate valve (2) being adjustable directly along the outlet edges (9) of the turbine guide apparatus (8, 8'), characterized in that the radially inner contour of the annular gate valve (2) simultaneously forms the outer radial limitation and continuation of the flow duct extending axially in the outlet flow region and specified by the turbine rotor blades (1), and that the end surface of the annular gate valve (2) and the adjacent surface of the annular gate valve facing towards the turbine rotor blades are rounded to conform with the flow.

2. Exhaust gas turbocharger according to Claim 1, characterized in that the control of the annular gate valve (2) takes place automatically by means of the pressure difference of the exhaust gas before and after the turbine rotor blades (1), the resulting gas force, which acts on the end surface of the annular gate valve (2), being in equilibrium with a spring force.

3. Exhaust gas turbocharger according to Claim 1, characterized in that the control of the annular gate valve (2) takes place automatically by means of one or more engine parameters such as, for example, pressure, temperature, rotational speed or load.

4. Exhaust gas turbocharger according to Claim 1, characterized in that the surface of the annular gate valve (2), which can be adjusted along the outlet edges of the turbine guide apparatus (8, 8'), is designed saw-tooth shaped, the pitch of these teeth being equal to the pitch of the turbine guide apparatus and the surface of the teeth facing towards the gas flow being substantially at right angles to the flow direction of the gas.

5. Exhaust gas turbocharger according to Claim 4, characterized in that the gas inlet casing (6) guiding the annular gate valve (2) is provided with corresponding teeth.

### Revendications

1. Turbocompresseur de suralimentation pour moteurs à combustion interne, dont la turbine est pourvue d'une valve annulaire glissant en direction axiale afin de modifier la section d'entrée de la turbine, dans lequel la valve annulaire (2) est disposée entre l'appareil directeur (8', 8") de la turbine, parcouru au moins partiellement en direction radiale, et les aubes mobiles (1) de la turbine et les arêtes de sortie (9) de la partie parcourue radialement de l'appareil directeur (8, 8') de la turbine se trouvent au moins en partie sur une surface cylindrique imaginaire, la valve annulaire (2) étant de ce fait capable de se déplacer directement le long des arêtes de sortie (9) de l'appareil directeur (8, 8') de la turbine, caractérisé en ce que la surface radialement intérieure de la valve annulaire (2) forme tout à la fois la limitation radiale extérieure et la continuation du canal d'écoulement orienté axialement dans la région d'échappement et déterminé par les aubes mobiles (1) de la turbine, et en ce que la face frontale et la face de la valve annulaire (2) qui s'y raccorde et qui est tournée vers les aubes mobiles de la turbine sont arrondies conformément à l'écoulement.

2. Turbocompresseur de suralimentation suivant la revendication 1, caractérisé en ce que la commande de la valve annulaire (2) est assurée automatiquement par la différence de pression des gaz d'échappement entre l'amont et l'aval des aubes mobiles (1) de la turbine, la force résultante exercée par les gaz, qui agit sur la face frontale de la valve annulaire (2), étant en équilibre avec une force élastique.

3. Turbocompresseur de suralimentation suivant la revendication 1, caractérisé en ce que la commande de la valve annulaire (2) est assurée automatiquement au moyen d'un ou de plusieurs paramètres du moteur, comme par exemple la pression, la température, la vitesse ou la charge.

4. Turbocompresseur de suralimentation suivant la revendication 1, caractérisé en ce que la surface de la valve annulaire (2) qui est déplaçable le long des arêtes de sortie de l'appareil directeur (8, 8') de la turbine est profilée en forme de dents de scie, la division de cette denture correspondant à la division de l'appareil directeur de la turbine et la face de la denture qui est tournée vers le courant de gaz étant essentiellement perpendiculaire à la direction d'admission des gaz.

5. Turbocompresseur de suralimentation suivant la revendication 4, caractérisé en ce que le corps (6) d'entrée des gaz guidant la valve annulaire (2) est pourvu d'une denture correspondante.

FIG.1

FIG.2

FIG. 3

3

FIG.4

4

FIG.5